# EUROPEAN PATENT APPLICATION

(11) **EP 4 707 911 A1**
(43) Date of publication of application: **11.03.2026**
(21) Application number: 24806593.0
(22) Date of filing: 15.05.2024
(51) Int. Cl.: G02F 1/163, G02F 1/1333, G02F 1/1343

(54) **PHOTOELECTRIC FUNCTIONAL FILM AND LIGHT-TRANSMITTING ASSEMBLY**

(30) Priority: 16.05.2023 CN 202310548238
(71) Applicant: Fuyao Glass Industry Group Co., Ltd., Fuqing, Fujian 350300 (CN)
(72) Inventor: FAN, Tuo, Fujian 350300 (CN); LIN, Shou, Fujian 350300 (CN); FENG, Tao, Fujian 350300 (CN)
(74) Representative: Corradini, Cesare
(86) International application number: PCT/CN2024/093283
(87) International publication number: WO 2024/235243

(57) **Abstract**

The present application relates to a photoelectric functional film (10) and a light-transmitting assembly. The photoelectric functional film comprises a functional layer (11), at least one base material body (12) and a flexible circuit board (13), wherein each base material body (12) is arranged with the functional layer (11) in a stacked manner, the surface of the at least one base material body (12) that faces the functional layer (11) or the surface of the at least one base material body (12) that faces away from the functional layer (11) is provided with a conductive layer (123), and the at least one base material body (12) further comprises an external expansion portion (121) that extends to the outside of the conductive layer (123); and an electrode of the flexible circuit board (13) is electrically connected to at least one conductive layer (123), and the circuit board base material of the flexible circuit board (13) is limited on the external expansion portion (121). By using the external expansion portion (121) as a bearing structure of the flexible circuit board (13), a pulling force borne at the position where the electrode of the flexible circuit board (13) is electrically connected to the conductive layer (123) is reduced, and the probability of the electrode detaching from the conductive layer (123) is reduced, such that the photoelectric functional film (10) can relatively reliably retain a regulation function.

## Description

### CROSS-REFERENCE TO RELATED APPLICATIONS

This application claims priority to Chinese patent application No. 2023105482387, entitled "PHOTOELECTRIC FUNCTIONAL FILM AND LIGHT-TRANSMITTING ASSEMBLY", filed on May 16, 2023, the disclosure of which is incorporated herein by reference in its entirety.

### TECHNICAL FIELD

The present application relates to the field of electronic control technology, in particular, to a photoelectric functional film and a light-transmitting assembly.

### BACKGROUND

With the development in the glass manufacturing industry, the functions of glass are becoming more and more diversified. For example, a light-transmitting assembly may adjust the light transmittance and a color-changing glass may change its color. This kind of glasses with special functions is provided with a photoelectric functional film. The photoelectric functional film is an electronic control device and may exhibit different states when subjected to changes in the electric field. A flexible circuit board is an important part of such electronic control device in this kind of glasses. The light-transmitting assembly has a light adjusting film, which can change the light transmittance under the action of an electric field. For example, the light adjusting film is in an opaque state when the power is off, and in a transparent state when the power is on. However, the regulating function of the glass may fail during actual use.

### SUMMARY

According to various embodiments of the present application, a photoelectric functional film and a light-transmitting assembly are provided in the present application.

A photoelectric functional film includes:
a functional layer, capable of exhibiting different states when an external electric field in which the functional layer is located changes;
at least one substrate body, each substrate body being stacked with the functional layer, where a conductive layer is disposed on a surface of the at least one substrate body facing the functional layer or facing away from the functional layer, and the at least one substrate body further includes an outward protruding part extending beyond the conductive layer; and
a flexible circuit board, where an electrode of the flexible circuit board is electrically connected to at least one conductive layer, and a circuit board substrate of the flexible circuit board is restricted on the outward protruding part.

In one of the embodiments, a direction in which the outward protruding part extends beyond the conductive layer is a width direction of the outward protruding part. A width direction of the circuit board substrate is consistent with the width direction of the outward protruding part. A width extent of the outward protruding part is not less than 1/3 of a width extent of the circuit board substrate. In one of the embodiments, the outward protruding part includes an insulating member

In one of the embodiments, a plurality of wiring gaps are arranged and spaced apart on the outward protruding part. Each wiring gap extends through two main side surfaces of the substrate body. The circuit board substrate is disposed on the outward protruding part by sequentially passing through the plurality of wiring gaps in a wavy path.

In one of the embodiments, the conductive layer electrically connected to the electrode of the flexible circuit board has a plurality of regulation regions; the plurality of regulation regions are insulated from each other; the flexible circuit board has a plurality of electrodes; each of the plurality of regulation regions is electrically connected to one of the plurality of electrodes, and the plurality of regulation regions are in one-to-one correspondence with the plurality of electrodes; and
a direction in which the plurality of wiring gaps are sequentially arranged and spaced apart is consistent with a direction in which the plurality of regulation regions are sequentially arranged, where among the plurality of wiring gaps located between two adjacent electrodes, a wiring gap closest to the electrode is a deflection gap, and the remaining wiring gaps are fixing gaps; the circuit board substrate passes through the fixing gaps from one side where the conductive layer is provided to an other side, and the circuit board substrate passes through the deflection gap from the other side to the one side where the conductive layer is provided.

In one of the embodiments, a width of the fixing gaps is greater than a width of the deflection gap. In one of the embodiments, the width of the fixing gaps is in a range of 2 mm to 5 mm, and the width of the deflection gap is equal to or less than 2 mm.

In one of the embodiments, a distance between two fixing gaps that are located between the two adjacent electrodes and adjacent to each other is in a range of 50 mm to 250 mm, and a distance between the deflection gap and the closest electrode is in a range of 15 mm to 75 mm.

In one of the embodiments, the plurality of regulation regions are separated by division lines formed on the conductive layer, at least one of the fixing gaps between the two adjacent electrodes is arranged on an extension line of the division line; and
a silver paste layer is disposed on an edge of the conductive layer and configured for hot pressing and electrical connection to the electrode, fixing gaps on extension lines of the division lines are extended to the silver paste layer, and the silver paste layer corresponding to different regulation regions is divided by the fixing gaps.

In one of the embodiments, the plurality of electrodes are sequentially arranged and spaced apart along a long edge of the circuit board substrate; the circuit board substrate is configured with a plurality of conductive wires; the plurality of conductive wires are electrically connected to the plurality of electrodes in a one-to-one correspondence; each conductive wire is routed along a length direction of the circuit board substrate, and the plurality of conductive wires are arranged and spaced apart in a width direction of the circuit board substrate; and
the plurality of wiring gaps are sequentially arranged and spaced apart along the length direction of the circuit board substrate.

In one of the embodiments, the electrodes electrically connected to the regulation regions are partitioned electrodes. The flexible circuit board further includes a common electrode. The conductive layer is disposed on each of two sides of the functional layer. The conductive layer on one of the sides of the functional layer has the plurality of regulation regions. The partitioned electrodes are connected to the plurality of regulation regions in a one-to-one correspondence; and the common electrode is connected to the conductive layer on another of the sides of the functional layer.

In one of the embodiments, the photoelectric functional film includes two substrate bodies, the two substrate bodies are respectively stacked on the two sides of the functional layer, the conductive layer is disposed on each of the two substrate bodies; and
the conductive layer, which is disposed on the substrate body with the outward protruding part, has the plurality of regulation regions, r is located on a side of the corresponding substrate body facing the functional layer, and is in direct contact with the functional layer.

In one of the embodiments, the photoelectric functional film further includes an edge sealing adhesive. The edge sealing adhesive is disposed on an outer peripheral surface of the functional layer.

In one of the embodiments, the outward protruding part includes a polyethylene terephthalate (PET) member, a polycarbonate (PC) member, or a polyvinyl chloride (PVC) member; and/or
the circuit board substrate includes a polyimide (PI) substrate or a polyethylene (PE) substrate; and/or
the circuit board substrate and the outward protruding part are adhered to each other, or engaged with each other.

A photoelectric functional film includes:
a functional layer, capable of exhibiting different states when an external electric field in which the functional layer is located changes;
at least one conductive substrate stacked with the functional layer, where each conductive substrate includes a substrate body and a conductive layer disposed on a surface of the substrate body facing the functional layer or facing away from the functional layer, at least one conductive layer is divided into a conductive region and an outward extension region which are insulated from each other, the conductive region being located between the functional layer and the corresponding substrate body, the outward extension region extending outside the functional layer, and a portion of the substrate body covered with the outward extension region and the outward extension region together form the outward protruding part; and
a flexible circuit board, where an electrode of the flexible circuit board is electrically connected to a region of the at least one conductive layer facing the functional layer, and a circuit board substrate of the flexible circuit board is restricted on the outward protruding part.

In one of the embodiments, the electrode of the flexible circuit board is electrically connected to the conductive region, the conductive region and the outward extension region which belongs to the outward protruding part, belong to the same conductive layer. A plurality of wiring gaps are arranged on the outward protruding part. Each wiring gap extends through the substrate body and the outward extension region of the conductive layer along a thickness direction of the conductive substrate. The circuit board substrate is disposed on the outward protruding part by sequentially passing through the plurality of wiring gaps in a wavy path.

A light-transmitting assembly includes:
a first light-transmitting plate;
a second light-transmitting plate; and
the above photoelectric functional film, where the first light-transmitting plate and the second light-transmitting plate are respectively stacked on two sides of the photoelectric functional film by adhesive films, and the functional layer is a light-regulating layer.

The details of one or more embodiments of the present application are set forth in the accompanying drawings and the detailed description hereinafter. Other features, objects, and advantages of the present application will be apparent from the detailed description, the accompanying drawings, and claims.

### BRIEF DESCRIPTION OF THE DRAWINGS

FIG. 1 is a schematic view illustrating a structure of a photoelectric functional film according to the present embodiment.
FIG. 2 is a sectional view taken along A-A direction in FIG. 1.
FIG. 3 is a sectional view taken along B-B direction in FIG. 1.
FIG. 4 is a sectional view of a photoelectric functional film according to another embodiment.
FIG. 5 is a partial enlarged view of portion C in FIG. 4.

### Illustration for Reference Numerals:

10, photoelectric functional film; 11, functional layer; 12, substrate body; 121, outward protruding part; 122, wiring gap; 1221, fixing gap; 1222, deflection gap; 123, conductive layer; 1231, regulation region; 1232, common electrode region; 1233, electrode division region; 1234, conductive region; 1235, outward extension region; 124, partition gap; 13, flexible circuit board; 131, circuit board substrate; 132, partitioned electrode; 133, conductive wire; 134, common electrode; 14, silver paste layer; 15, edge-reinforcing adhesive film; 16, groove.

### DETAILED DESCRIPTION

In order to make the objects, features, and advantages of the present application more apparent and understandable, the specific implementations of the present application will be explained in detail below in conjunction with the accompanying drawings. In the following description, numerous specific details are set forth in order to facilitate a thorough understanding of the present application. However, the present application can be implemented in many other ways different from those described herein, and those skilled in the art can make similar modifications without departing from the connotation of the application, so that the present application is not limited to the specific embodiments disclosed below.

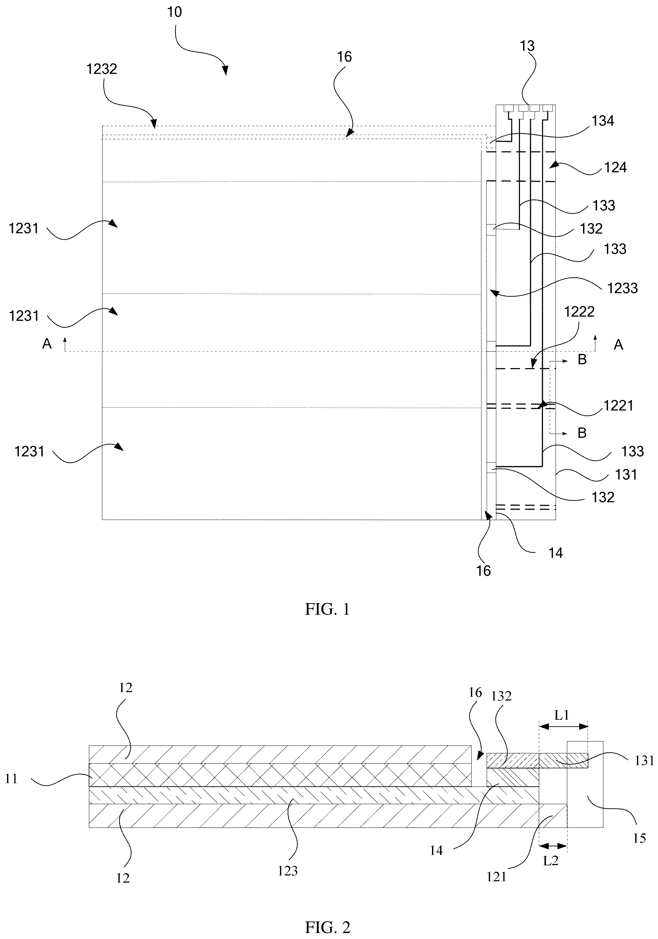

As shown in FIG. 1 and FIG. 2, the thickness of the photoelectric functional film 10 is relatively thin, so an electronic control device such as a flexible circuit board 13, which is high in wiring density, light in weight, thin in thickness and easy to bend, is generally used. The photoelectric functional film 10 includes a functional layer 11. The functional layer 11 can exhibit different states when the external electric field in which the functional layer 11 is located changes. The flexible circuit board 13 may be configured to regulate the external electric field in which the functional layer 11 is located. For example, a conductive layer 123 is disposed on at least one of sides of the functional layer 11. A silver paste layer 14 configured for electrically connecting electrodes is disposed on the conductive layer 123. Electrodes of the flexible circuit board 13 is electrically connected to the silver paste layer 14, so that a control unit in the flexible circuit board 13 or another external controller may control an alternating voltage applied to the conductive layer, thereby regulating the external electric field in which the functional layer 11 is located.

The electrodes of the flexible circuit board 13 and the silver paste 14 may be electrically connected together by means of hot pressing, and since the connection positions therebetween are relatively fragile, when a pulling force received by the flexible circuit board 13 is sufficient, the electrodes may easily fall off from the silver paste 14. With the development in the glass manufacturing industry, regional regulation is becoming more and more common. Different regions need to be controlled separately. Each region needs to be provided with corresponding electrodes, so that the number of electrodes included in the flexible circuit board 13 can be increased, and the number of the corresponding wirings can also be increased. As shown in FIG. 1, when the number of wirings in the flexible circuit board 13 increases, the width size of the flexible circuit board 13 (the leftward and rightward direction is the width direction in the perspective of the figure) can increase, and more parts of the flexible circuit board 13 can be suspended outside a substrate body 12, resulting in that a relatively large pulling force is applied on the positions where the electrodes of the flexible circuit board 13 and the silver paste layer 14 are electrically connected to each other by means of hot pressing. The electrodes may easily fall off during transportation or assembling, thereby posing a risk of failure in the regulating function of the glass.

The electrodes of the flexible circuit board 13 may also be adhered to the conductive layer 13, as such, the adhesive area therebetween is limited, the connection position therebetween may be weak, so that there is also a problem that the electrodes are easy to fall off when subjected to a sufficient pulling force.

Based on the above, in some embodiments of the present application, as shown in FIG. 1 to FIG. 3, a photoelectric functional film 10 is provided. The photoelectric functional film 10 includes a functional layer 11, at least one substrate body 12 and a flexible circuit board 13.

The functional layer 11 can exhibit different states when the external electric field in which the functional layer 11 is located changes. The functional layer 11 can be a light-regulating layer, and can exhibit different light transmittances when the external electric field in which the functional layer 11 is located changes. The functional layer 11 can also be an electrochromic layer, and can exhibit different colors when the external electric field in which the functional layer 11 is located changes.

Each substrate body 12 is stacked with a functional layer. As shown in FIG. 2, when the photoelectric functional film 10 includes two substrate bodies, the two substrate bodies 12 are respectively stacked on two sides of the functional layer 11.

A conductive layer 123 is disposed on a surface of at least one of the substrate bodies 12 facing the functional layer 11 or facing away from the functional layer 11. In other words, as shown in FIG. 2, the conductive layer 123 can be located between the substrate body 12 and the functional layer 11. Alternatively, the conductive layer 123 can be located on the side of the substrate body 12 facing away from the functional layer. The conductive layer 123 can be provided on only a portion of the substrate body 12, or the conductive layers can be provided on the entire substrate body 12.

It can be understood that, it is only required that a portion of the conductive layer 123 faces the functional layer 11, and the external electric field in which the functional layer 11 is located can be changed when the conductive layer 123 is electrically connected to an alternating voltage, it would be sufficient. In addition, the conductive layer 123 can be in direct contact with the functional layer 11. Alternatively, an intermediate layer can be disposed between the conductive layer 123 and the functional layer 11, and the intermediate layer can be a conductive structural layer or an insulative structural layer.

In addition, the conductive layer 123 can be disposed on each of two sides of the functional layer 11, or the conductive layer 123 can be disposed only on one side of the functional layer 11, as long as the disposed conductive layer 123 can control the external electric field in which the functional layer 11 is located.

At least one of the substrate bodies 12 further includes an outward protruding part 121 extending beyond the conductive layer 123. The electrodes of the flexible circuit board 13 are electrically connected to at least one conductive layer 123, and a circuit board substrate 131 of the flexible circuit board 13 is restricted on the outward protruding part 121.

The flexible circuit board 13 includes an electrode and the circuit board substrate 131. The circuit board substrate 131 can be provided therein with a conductive wire 133 configured for being electrically connected to the electrode. The electrode is located outside the circuit board substrate 131. The weight of the circuit board substrate 131 and the weight of other electrical interfaces provided on the circuit board substrate 131 account for the majority of the weight of the flexible circuit board 13. After the circuit board substrate 131 is restricted on the outward protruding part 121, that is, when the position of the circuit board substrate 131 can be limited by the outward protruding part 121, the outward protruding part 121can bear the weight of the circuit board substrate 131, so that the position where the electrode is electrically connected to the conductive layer 123 does not have to bear too much pulling force, the probability of the electrode detachment is greatly reduced, the reliability of the photoelectric functional film 10 is ensured, and the probability of failure of the regulation function of the photoelectric functional film 10 is reduced. As shown in FIG. 2, the outward protruding part 121 in the above-described embodiment is formed by outwardly extending from the substrate body 12. In this case, the outward protruding part 121 does not include the conductive layer 123, and the outer peripheral dimension of the outward protruding part 121 is directly designed to be greater than that of the conductive layer 123 during manufacturing.

It should be noted that, only one edge of the substrate body 12 may extend outwardly beyond the conductive layer 123, and other edges of the substrate body 12 can be kept aligned with the conductive layer 123. For example, both the substrate body 12 and the conductive layer 123 are rectangular sheets. The length of the substrate body 12 is greater than the length of the conductive layer 123, and the width of the substrate body 12 is the same as the width of the conductive layer 123. The two long edges of the substrate body 12 are respectively aligned with the two long edges of the conductive layer 123, but the long edges of the substrate body 12 are longer than the long edges of the conductive layer 123. One short edge of the substrate body 12 is aligned with the conductive layer 123, the other short edge of the substrate body 12 is located beyond the conductive layer 123, and the short edge located beyond the conductive layer 123 belongs to the outward protruding part 121.

Optionally, the substrate body 12 extends outwardly with respect to the conductive layer 123 in a plurality of directions. For example, both the substrate body 12 and the conductive layer 123 are rectangular sheets. The length of the substrate body 12 is greater than the length of the conductive layer 123, the width of the substrate body 12 is greater than the width of the conductive layer 123, and a projection of the conductive layer 123 on the substrate body 12 along a thickness direction of the photoelectric functional film 10 is completely located within the substrate body 12. There is a portion of the substrate body 12 on all sides extending outwardly beyond the conductive layer 123.

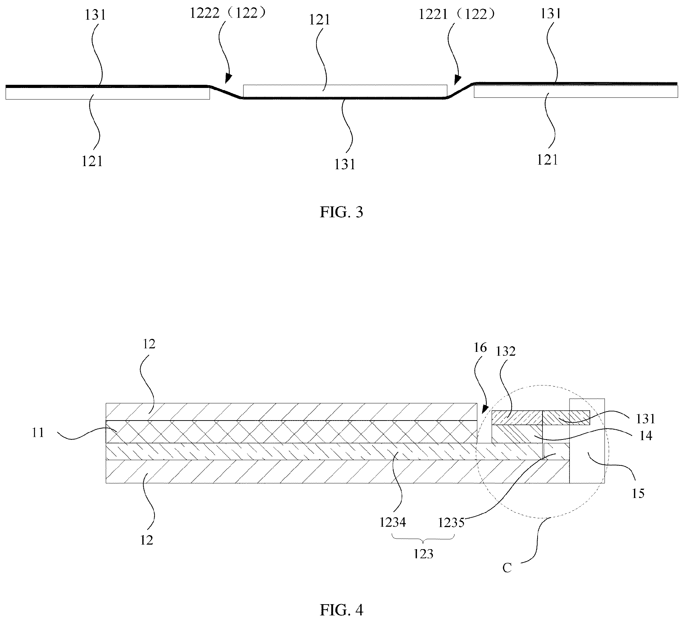

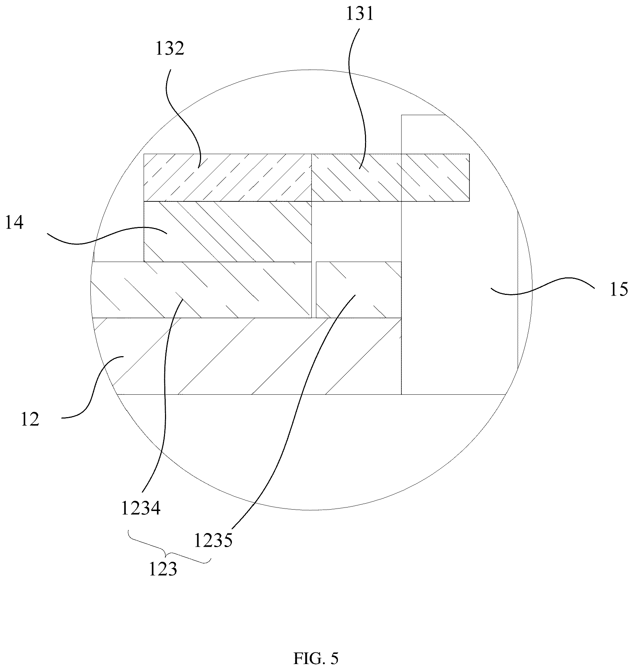

In other cases, as shown in FIG. 4, the outward protruding part 121 can include a portion of the conductive layer 123. For example, in other embodiments, as shown in FIGS. 4 and 5, the photoelectric functional film 10 includes a functional layer 11, at least one conductive substrate and a flexible circuit board 13. The functional layer 11 can exhibit different states when the external electric field in which the functional layer 11 is located changes. The conductive substrate and the functional layer 11 are stacked. Each conductive substrate includes a substrate body 12 and a conductive layer 123 disposed on a surface of the substrate body 12 facing the functional layer 11 or facing away from the functional layer 11. At least one conductive layer 123 is divided into a conductive region 1234 and an outward extension region 1235 which are insulated from each other. The conductive region is located between the functional layer 11 and the corresponding substrate body 12, and the outward extension region extends outside the functional layer 11. A portion of the substrate body 12 covered with the outward extension region 1235 and the outward extension region 1235 together form an outward protruding part 121. The electrodes of the flexible circuit board 13 are electrically connected to a region of the at least one conductive layer 123 facing the functional layer 11, and the circuit board substrate 131 of the flexible circuit board 13 is restricted on the outward protruding part 121.

As shown in FIG. 4 and FIG. 5, in the present embodiment, the outward protruding part 121 includes a portion of the substrate body 12 and a portion (i.e., the outward extension region 1235) of the conductive layer 123. However, the portion (i.e., the outward extension region 1235) of the conductive layer 123 that belongs to the outward protruding part 121 is insulated from the conductive region 1234, so that the outward protruding part 121 is essentially also a member that is insulated from the conductive region 1234, and the outward protruding part 121 is mainly configured for bearing the weight of the circuit board substrate 131.

During manufacturing, the conductive layer 123 can first be arranged on the entire surface of the substrate body 12 facing the functional layer 11, and then a partition line can be formed on the conductive layer 123 by a process such as etching, so that the conductive region 1234 and the outward extension region 1235 are separated from each other, thereby forming the conductive region 1234 and the outward extension region 1235 that are insulated from each other. As shown in FIG. 5, a narrow gap is formed between the conductive region 1234 and the outward extension region 1235. This narrow gap is formed in diversified specific ways. Finally, the conductive region 1234 and the outward extension region 1235 are separated from each other.

The conductive layer 123 in the embodiment in which the outward protruding part 121 includes only a portion of the substrate body 12 is similar to the conductive region in the embodiment in which the outward protruding part 121 includes both a portion of the substrate body 12 and the outward extension region 1235.

If the photoelectric functional film 10 includes two substrate bodies 12, the substrate body 12 on which the conductive layer 123 configured for being electrically connected to the electrodes of the flexible circuit board 13 is located, and the substrate body 12 having a portion belonging to the outward protruding part 121 can be the same substrate body 12 or two different substrate bodies 12.

In an embodiment, as shown in FIGS. 4 and 5, the portion of the substrate body 12 covered with the outward extension region 1235 and the outward extension region 1235 together form the outward protruding part 121, while the electrodes of the flexible circuit board 13 are electrically connected to the conductive region 1234, and this conductive region 1234 and the outward extension region 1235, which belongs to the outward protruding part 121, both belong to the same conductive layer 123.

Further, in some embodiments, as shown in FIG. 1 and FIG. 2, the conductive layer 123 electrically connected to the electrodes of the flexible circuit board 13 has a plurality of regulation regions 1231 insulated from each other. The flexible circuit board 13 has a plurality of electrodes. Each regulation region 1231 is electrically connected to an electrode, and the regulation regions 1231 are in a one-to-one correspondence with the electrodes. As shown in FIG. 1, each electrode electrically connected to the regulation region 1231 is a partitioned electrode 132. Each regulation region 1231 can be independently regulated, so each regulation region 1231 needs to be provided with a corresponding electrode independently. When the number of electrodes increases, the number of conductive wires 133 corresponding to the electrodes in the circuit board substrate 131 increases as well, thereby increasing the volume and weight of the circuit board substrate 131. In this case, the necessity of providing the outward protruding part 121 to support the circuit board substrate 131 is further enhanced.

Specifically, in some embodiments, when the outward protruding part 121 is formed by extending the substrate body 12 beyond the conductive layer 123, the conductive layer 123, which is disposed on the substrate body 12 with the outward protruding part 121 formed thereon, has a plurality of regulation regions 1231. The plurality of regulation regions 1231 are insulated from each other. The flexible circuit board 13 has a plurality of electrodes, each regulation region 1231 is electrically connected to an electrode, and the regulation regions 1231 are in a one-to-one correspondence with the electrodes.

The substrate body 12 on which the conductive layer 123 electrically connected to the flexible circuit board 13 is located, and the substrate body 12 including the outward protruding part 121 for restricting the circuit board substrate 131 are the same substrate body 12. Therefore, the electrodes of the flexible circuit board 13, and the circuit board substrate 131 are basically located on the same substrate body 12, and the electrodes and the circuit board substrate 131 can be basically kept on the same plane, so that the reliability of the electrical connection between the electrodes and the conductive layer 123 is relatively high. In particular, when the plurality of partitioned electrodes 132 are electrically connected to the plurality of regulation regions 1231 in a one-to-one correspondence, the conductive layer 123, which is disposed on the substrate body 12 with the outward protruding part 121 formed thereon, has a plurality of regulation regions 1231. The plurality of partitioned electrodes 132 and the circuit board substrate 131 are basically disposed on the same substrate body 12. When the circuit board substrate 131 extends through various wiring gaps 122 in a wavy path, a height difference between the partitioned electrode 132 and the regulation region 1231 is relatively small, so that the reliability of the electrical connection between the partitioned electrodes 132 and the regulation regions 1231 is relatively high.

Similarly, in other embodiments, when the outward protruding part 121 includes a portion of the substrate body 12 and a portion (i.e., the outward extension region 1235) of the conductive layer 123, the conductive region 1234 has a plurality of regulation regions 1231. The plurality of regulation regions 1231 are insulated from each other. The flexible circuit board 13 has a plurality of electrodes. Each regulation region 1231 is electrically connected to an electrode, and the regulation regions 1231 are in a one-to-one correspondence with the electrodes. The conductive region including the plurality of regulation regions 1231, and the outward extension region belonging to the outward protruding part 121 both belong to the same conductive layer 123.

The circuit board substrate 131 and the outward protruding part 121 can be adhered, connected, or restricted together in other ways.

For example, in some embodiments, as shown in FIGS. 1 to 3, the outward protruding part 121 is provided with a plurality of wiring gaps 122 spaced apart from each other. When the outward protruding part 121 is formed by extending the substrate body 12 beyond the conductive layer 123, each wiring gap 122 extends through both main side surfaces of the substrate body 12. When the outward protruding part 121 includes a portion of the substrate body 12 and the outward extension region 1235 of the conductive layer 123, each wiring gap 122 extends through the substrate body 12 and the outward extension region of the conductive layer 123 along the thickness direction of the conductive substrate. Then, as shown in FIG. 1 and FIG. 3, the circuit board substrate 131 is disposed on the outward protruding part 121 by sequentially passing through the wiring gaps 122 in a wavy path.

The circuit board substrate 131 is bond to the outward protruding part 121 along the wavy path. The relative position between the circuit board substrate 131 and the outward protruding part 121 is basically fixed, so that the position where the electrode is electrically connected to the conductive layer 123 bears less pulling force, and the reliability of the electrical connection between the electrode and the conductive layer 123 is relatively high. Moreover, the overall thickness formed by the circuit board substrate 131 traversing the outward protruding part 121 is relatively small, and the structure is compact.

Further, in some embodiments, as shown in FIG. 1 and FIG. 2, when the outward protruding part 121 is formed by extending the substrate body 12 beyond the conductive layer 123, a direction in which the outward protruding part 121 extends beyond the conductive layer 123 is the width direction of the outward protruding part 121. When the outward protruding part 121 includes a portion of the substrate body 12 and the outward extension region 1235 of the conductive layer 123, a direction in which the outward protruding part 121 extends beyond the conductive layer 123 is the width direction of the outward protruding part 121.

As shown in FIG. 2, the width direction of the circuit board substrate 131 is consistent with the width direction of the outward protruding part 121, and the width extent L2 of the outward protruding part 121 is not less than 1/3 of the width extent L1 of the circuit board substrate 131, so that the outward protruding part 121 can provide strong support for the circuit board substrate 131.

In some embodiments, as shown in FIGS. 1 and 2, the outward protruding part 121 is an insulating member. When the outward protruding part 121 is formed by extending the substrate body 12 beyond the conductive layer 123, the material of the outward protruding part 121 and the material of the substrate body 12 are the same, and both are insulating materials. It should be noted that the insulating member referred to herein means that a surface layer of such member, which is at least in contact with the circuit board substrate 131, is made of an insulating material, and there is no limitation on whether or not there are conductive materials arranged in the member.

When the outward protruding part 121 includes a portion of the substrate body 12 and the outward extension region 1235 of the conductive layer 123, although the outward extension region 121 includes the outward extension region 1235 of the conductive layer 123, such region is insulated from the conductive region 1234. Therefore, in this case, the outward protruding part 121 still does not conduct electricity when the conductive region 1234 is electrified.

In some embodiments, as shown in FIG. 1, a plurality of electrodes are sequentially arranged and spaced apart along the long edge of the circuit board substrate 131. The circuit board substrate 131 is configured with a plurality of conductive wires 133. The conductive wires 133 are electrically connected to the electrodes in a one-to-one correspondence. Each conductive wire 133 is routed along the length direction of the circuit board substrate 131, and the conductive wires 133 are spaced apart in the width direction of the circuit board substrate 131. The increase in the number of conductive wires 133 increases the width extent of the circuit board substrate 131. The wiring gaps 122 are sequentially arranged and spaced apart along the length direction of the circuit board substrate 131. The electrodes on the long edge are just electrically connected to the conductive layer 123 as the circuit board substrate 131 passes through the wiring gaps 122.

Further, as shown in FIGS. 1 and 3, in some embodiments, the direction in which the plurality of wiring gaps 122 are sequentially arranged and spaced apart is consistent with the direction in which the plurality of regulation regions 1231 are sequentially arranged. Among the plurality of wiring gaps 122 located between two adjacent electrodes, a wiring gap closest to the electrode is a deflection gap 1222, and the remaining wiring gaps are fixing gaps 1221. The circuit board substrate 131 passes through the fixing gaps 1221 from one side where the conductive layer 123 is provided to the other side, and the circuit board substrate 131 passes through the deflection gap 1222 from the other side to the one side where the conductive layer 123 is provided. No matter how many wiring gaps 122 are arranged between two adjacent electrodes, the circuit board substrate 131 can finally pass through the deflection gap 1222 to the one side where the conductive layer 123 is provided, so that the electrodes of the flexible circuit board 13 are electrically connected to the conductive layer 123.

Further, in some embodiments, the width of the fixing gap 1221 is greater than the width of the deflection gap 1222. As shown in FIG. 1 and FIG. 3, each wiring gap 122 is an elongated gap. The fixing gap 1221 is mainly configured for guiding the circuit board substrate 131 to be arranged along the wavy path, and therefore the width of the fixing gap 1221 is set to be relatively large, so as to facilitate the passage of the circuit board substrate 131. The deflection gap 1222 is mainly configured to change the orientation of the circuit board substrate 131, so that the circuit board substrate 131 passes through to the one side where the conductive layer 123 is located, and therefore the width of the deflection gap 1222 is set to be relatively small as long as it allows the circuit board substrate 131 to pass through.

Further, in some embodiments, as shown in FIG. 1, the regulation regions 1231 are separated from each other by division lines formed on the conductive layer 123. At least one fixing gap 1221 between two adjacent electrodes is arranged on the extension line of the division line.

A silver paste layer 14 is disposed on an edge of the conductive layer 123 and configured for hot pressing and electrical connection to the electrode. The fixing gap 1221 on the extension line of the division line is extended to the silver paste layer 14, and the silver paste layer 14 corresponding to different regulation regions 1231 is divided by the fixing gap 1221. The relatively wide fixing gap 1221 forms reliable insulation between the silver paste layers 14 corresponding to the two regulation regions 1231, so as to avoid erroneous contact of the silver paste layers 14 corresponding to the different regulation regions 1231.

In some specific embodiments, the division lines are parallel to each other. As shown in FIG. 1, each regulation region 1231 is rectangular.

In some embodiments, the width of the fixing gap 1221 is in a range of 2 mm to 5 mm and the width of the deflection gap 1222 is not greater than 2 mm. For example, the width of the deflection gap 1222 can be 1 mm.

Further, in some embodiments, a distance between two fixing gaps 1221 that are located between two adjacent electrodes and are adjacent to each other is in a range of 50 mm to 250 mm, so that it can be ensured that the circuit board substrate 131 passing through the fixing gaps 1221 is securely clamped or positioned. A distance between the deflection gap 1222 and the closest electrode is in a range of 15 mm to 75 mm, which can ensure a close electrical connection between the electrode on the circuit board substrate 131 passing through the deflection gap 1222 and the conductive layer 123.

Specifically, in an embodiment, the distance between two fixing gaps that are located between two adjacent electrodes and adjacent to each other is in a range of 100 mm to 200 mm, and the distance between the deflection gap and the closest electrode is in a range of 20 mm to 50 mm.

In some embodiments, as shown in FIG. 1, each electrode electrically connected to the regulation region 1231 is the partitioned electrode 132, and the flexible circuit board 13 further includes a common electrode 134. The conductive layer 123 is disposed on each of two sides of the functional layer 11. The conductive layer 123 on one side of the functional layer 11 has a plurality of regulation regions 1231. The partitioned electrodes 132 are connected to the regulation regions 1231 in a one-to-one correspondence. The common electrode is connected to the conductive layer 123 on the other side of the functional layer 11. A region on the conductive layer 123 configured for being electrically connected to each of the partitioned electrodes 132 is an electrode division region 1233, and a region on the conductive layer 123 configured for being electrically connected to the common electrode is a common electrode region 1232. Each of the partitioned electrodes 132 is independently controlled so that each of the regulation regions 1231 can be independently controlled by the region.

As shown in FIGS. 1 and 2, in some embodiments, the silver paste layer 14 is disposed on the electrode division region 1233. Each of the partitioned electrodes 132 is electrically connected to the silver paste layer 14 corresponding to one of the regulation regions 1231. The electrode division region 1233 is an edge region of the conductive layer, and in some cases, the electrode division region 1233 is an elongated region.

The electrode division region 1233 and the common electrode region 1232 respectively belong to different conductive layers 123. If the common electrode region 1232 is arranged on the side where the outward protruding part 121 is located, in order to further ensure that the silver paste layers 14 on the electrode division region 1233 and the common electrode region 1232 do not come into contact, in some cases, a partition gap 124 can be formed on the outer outward protruding part. The partition gap 124 is located at the junction between the electrode division region 1233 and the common electrode region 1232, so that the silver paste layers 14 on the electrode division region 1233 and the common electrode region 1232 are separated.

In other embodiments, when the functional layer 11 only has the conductive layer 123 on one side, the plurality of regulation regions 1231 belongs to such conductive layer 123.

Further, as shown in FIG. 2, in some embodiments, the photoelectric functional film 10 further includes an edge sealing adhesive (not shown in the figure). The edge sealing adhesive is disposed on the outer peripheral surface of the functional layer 11 to protect the functional layer 11 that is on the inner side. During lamination, the photoelectric functional film 10 is sandwiched between two glasses, and an adhesive film is disposed between the glass and the substrate body 12. At the same time, a region in the space between the two glasses, which is not occupied by the photoelectric functional film 10, can also be filled with the adhesive film. In this case, the edge sealing adhesive can avoid contact between the adhesive film and the functional layer 11.

As shown in FIGS. 2 and 3, in some embodiments, the silver paste layer 14 is spaced apart from the functional layer 11 to form a groove 16. The edge sealing adhesive is filled in the groove 16. A portion of the adhesive film located between the two glasses abuts against the two glasses, and such portion of the adhesive film is referred to as an edge-reinforcing adhesive film 15. The difference between the thickness of the edge-reinforcing adhesive film 15 and the thickness of the photoelectric functional film 10 is not greater than 100 microns, so as to prevent the glass from being shattered due to the height difference between the edge-reinforcing adhesive film 15 and the photoelectric functional film 10 during high-pressure lamination. The adhesive film can be a polyvinyl butyral (PVB) member, an ethylene vinyl acetate (EVA) member, or a thermoplastic Polyurethane (TPU) member, or any combination thereof.

The edge-reinforcing adhesive film 15 is disposed on the outer periphery of a laminated structure formed by the substrate body 12 and the functional layer 11. The upper and lower surfaces of the edge-reinforcing adhesive film 15 are respectively flush with the main side surfaces of the two substrate bodies 12 facing away from each other, and the edge-reinforcing adhesive film 15 are positioned to abut against the edge of the outward protruding part 121. The substrate body 12 extends outwardly with respect to the functional layer 11. In order to achieve that the thickness of the outer edge portion of the photoelectric functional film 10 is substantially the same as the thickness of the middle portion of the photoelectric functional film 10, the edge sealing adhesive film 15 is further provided, it is also possible to prevent the electronic control device on the photoelectric functional film 10 from being crushed during lamination.

Specifically, in some embodiments, the outward protruding part 121 includes, but is not limited to, a polyethylene terephthalate (PET) member, a polycarbonate (PC) member, or a polyvinyl chloride (PVC) member.

The circuit board substrate 131 includes, but is not limited to, a polyimide (PI) substrate or a polyethylene (PE) substrate.

Further, some embodiments of the present application provide a light-transmitting assembly, including a first light-transmitting plate, a second light-transmitting plate and the photoelectric functional film 10 as described above. Both the first light-transmitting plate and the second light-transmitting plate can be glass components. The first light-transmitting plate and the second light-transmitting plate are respectively stacked on two sides of the photoelectric functional film 10, and the functional layer 11 is the light-regulating layer. Specifically, the first light-transmitting plate and the second light-transmitting plate can be combined with the photoelectric functional film 10 through adhesive films.

Since the light-transmitting assembly as provided above includes the photoelectric functional film 10, the probability of failure of the regulation function of the light-transmitting assembly is greatly reduced. Specifically, the outward protruding part 121 can serve as a supporting structure for the flexible circuit board 13, which can reduce the pulling force received at the portions where the electrodes of the flexible circuit board 13 are electrically connected to the conductive layer 123, and reduce the probability that the electrodes fall off from the conductive layer 123, so that the photoelectric functional film 10 can have a reliable the regulation function.

In the description of the present application, it is to be understood that, if the terms "length", "width", "thickness", "outer", etc. appear, they indicate the orientations or positional relationships on the basis of the orientations or positional relationships shown in the drawings. These terms are only intended for facilitating illustrating the present application and simplifying the illustration, rather than indicating or implying that the devices or elements referred to have to present particular orientations, and be constructed and operated in particular orientations, and therefore cannot be construed as limiting the present application.

In addition, if the terms "first" and "second" appear, they are only intended for illustrative purposes, rather than being construed as indicating or implying relative importance or implicitly designating the number of the technical features as indicated. Thus, the features defined by "first" and "second" may explicitly or implicitly include at least one of said features. In the description of the present application, if the term "a plurality of" appear, it means at least two, for example two or three, unless otherwise explicitly and specifically defined.

In the present application, unless otherwise expressly specified and limited, if the terms "connecting", "fixation", etc. appear, these terms shall be understood in a broad sense, for example, they may refer to a fixed connection or detachable connection, or integrally formed; or a mechanical connection or an electrical connection; or a direct connection or an indirect connection through an intermediate medium. For those of ordinary skill in the art, the specific meanings of the above-described terms in the present application may be understood according to specific circumstances.

In the present application, unless otherwise expressly stated and defined, the first feature, if being referred to as being located "above" or "below" the second feature, may be in direct contact with the second feature, or in indirect contact with the second feature via an intermediate feature. The technical features of the embodiments above may be combined arbitrarily. To make the description concise, not all possible combinations of the technical features in the above embodiments are described. However, as long as there are no contradictions in the combinations of these technical features, all of the combinations should be considered to be within the scope of the specification.

The embodiments above only illustrate several implementations of the present application, and the description thereof is relatively specific and detailed, but it should not be construed as limiting the scope of the application patent. It should be noted that for those skilled in the art, various modifications and improvements may be made without departing from the concept of the present application, and all these modifications and improvements fall within the protection scope of the present application. Therefore, the scope of protection of the patent application should be subject to the appended claims.

## Claims

1. A photoelectric functional film, comprising:
a functional layer, capable of exhibiting different states when an external electric field in which the functional layer is located changes;
at least one substrate body, each substrate body being stacked with the functional layer, wherein a conductive layer is disposed on a surface of the at least one substrate body facing the functional layer or facing away from the functional layer, and the at least one substrate body further comprises an outward protruding part extending beyond the conductive layer; and
a flexible circuit board, wherein an electrode of the flexible circuit board is electrically connected to at least one conductive layer, and a circuit board substrate of the flexible circuit board is restricted on the outward protruding part.

2. The photoelectric functional film according to claim 1, wherein a direction in which the outward protruding part extends beyond the conductive layer is a width direction of the outward protruding part, a width direction of the circuit board substrate is consistent with the width direction of the outward protruding part, and a width extent of the outward protruding part is not less than 1/3 of a width extent of the circuit board substrate.

3. The photoelectric functional film according to claim 1 or 2, wherein the outward protruding part comprises an insulating member.

4. The photoelectric functional film according to any one of claims 1 to 3, wherein a plurality of wiring gaps are arranged and spaced apart on the outward protruding part; each wiring gap extends through two main side surfaces of the substrate body; and the circuit board substrate is disposed on the outward protruding part by sequentially passing through the plurality of wiring gaps in a wavy path.

5. The photoelectric functional film according to claim 4, wherein the conductive layer electrically connected to the electrode of the flexible circuit board has a plurality of regulation regions; the plurality of regulation regions are insulated from each other; the flexible circuit board has a plurality of electrodes; each of the plurality of regulation regions is electrically connected to one of the plurality of electrodes; and the plurality of regulation regions are in one-to-one correspondence with the plurality of electrodes; and
wherein a direction in which the plurality of wiring gaps are sequentially arranged and spaced apart is consistent with a direction in which the plurality of regulation regions are sequentially arranged, wherein among the plurality of wiring gaps located between two adjacent electrodes, a wiring gap closest to the electrode is a deflection gap, and the remaining wiring gaps are fixing gaps; the circuit board substrate passes through the fixing gaps from one side where the conductive layer is provided to an other side, and the circuit board substrate passes through the deflection gap from the other side to the one side where the conductive layer is provided.

6. The photoelectric functional film according to claim 5, wherein a width of the fixing gaps is greater than a width of the deflection gap.

7. The photoelectric functional film according to claim 6, wherein the width of the fixing gaps is in a range of 2 mm to 5 mm, and the width of the deflection gap is not greater than 2 mm.

8. The photoelectric functional film according to any one of claims 5 to 7, wherein a distance between two fixing gaps that are located between the two adjacent electrodes and adjacent to each other is in a range of 50 mm to 250 mm, and a distance between the deflection gap and the closest electrode is in a range of 15 mm to 75 mm.

9. The photoelectric functional film according to any one of claims 5 to 8, wherein the plurality of regulation regions are separated by division lines formed on the conductive layer, at least one of the fixing gaps between the two adjacent electrodes is arranged on an extension line of the division line; and
wherein a silver paste layer is disposed on an edge of the conductive layer and configured for hot pressing and electrical connection to the electrode, fixing gaps on extension lines of the division lines are extended to the silver paste layer, and the silver paste layer corresponding to different regulation regions is divided by the fixing gaps.

10. The photoelectric functional film according to any one of claims 5 to 9, wherein the plurality of electrodes are sequentially arranged and spaced apart along a long edge of the circuit board substrate, the circuit board substrate is configured with a plurality of conductive wires; the plurality of conductive wires are electrically connected to the plurality of electrodes in a one-to-one correspondence, each conductive wire is routed along a length direction of the circuit board substrate, and the plurality of conductive wires are arranged and spaced apart in a width direction of the circuit board substrate; and
wherein the plurality of wiring gaps are sequentially arranged and spaced apart along the length direction of the circuit board substrate.

11. The photoelectric functional film according to any one of claims 5 to 10, wherein the electrodes electrically connected to the regulation regions are partitioned electrodes, the flexible circuit board further comprises a common electrode, wherein the conductive layer is disposed on each of two sides of the functional layer, the conductive layer on one of the sides of the functional layer has the plurality of regulation regions, the partitioned electrodes are connected to the plurality of regulation regions in a one-to-one correspondence; and the common electrode is connected to the conductive layer on another of the sides of the functional layer.

12. The photoelectric functional film according to claim 11, wherein the photoelectric functional film comprises two substrate bodies, the two substrate bodies are respectively stacked on the two sides of the functional layer, the conductive layer is disposed on each of the two substrate bodies; and
wherein the conductive layer, which is disposed on the substrate body with the outward protruding part, has the plurality of regulation regions, is located on a side of the corresponding substrate body facing the functional layer, and is in direct contact with the functional layer.

13. The photoelectric functional film according to any one of claims 1 to 12, further comprising an edge sealing adhesive disposed on an outer peripheral surface of the functional layer.

14. The photoelectric functional film according to any one of claims 1 to 13, wherein the outward protruding part comprises a polyethylene terephthalate (PET) member, a polycarbonate (PC) member, or a polyvinyl chloride (PVC) member; and/or
the circuit board substrate comprises a polyimide (PI) substrate or a polyethylene (PE) substrate; and/or
the circuit board substrate and the outward protruding part are adhered to each other, or engaged with each other.

15. A photoelectric functional film, comprising:
a functional layer, capable of exhibiting different states when an external electric field in which the functional layer is located changes;
at least one conductive substrate stacked with the functional layer, wherein each conductive substrate comprises a substrate body and a conductive layer disposed on a surface of the substrate body facing the functional layer or facing away from the functional layer, at least one conductive layer is divided into a conductive region and an outward extension region which are insulated from each other, the conductive region being located between the functional layer and the corresponding substrate body, the outward extension region extending outside the functional layer, and a portion of the substrate body covered with the outward extension region and the outward extension region together form the outward protruding part; and
a flexible circuit board, wherein an electrode of the flexible circuit board is electrically connected to a region of the at least one conductive layer facing the functional layer, and a circuit board substrate of the flexible circuit board is restricted on the outward protruding part.

16. The photoelectric functional film according to claim 15, wherein the electrode of the flexible circuit board is electrically connected to the conductive region; the conductive region and the outward extension region which belongs to the outward protruding part, belong to a same conductive layer; a plurality of wiring gaps are arranged on the outward protruding part; each wiring gap extends through the substrate body and the outward extension region of the conductive layer along a thickness direction of the conductive substrate; and the circuit board substrate is disposed on the outward protruding part by sequentially passing through the plurality of wiring gaps in a wavy path.

17. A light-transmitting assembly, comprising:
a first light-transmitting plate;
a second light-transmitting plate; and
the photoelectric functional film according to any one of claims 1 to 16, wherein the first light-transmitting plate and the second light-transmitting plate are respectively stacked on two sides of the photoelectric functional film by adhesive films, and the functional layer is a light-regulating layer.
